# EUROPÄISCHE PATENTANMELDUNG

(11) **EP 1 469 272 A2**
(43) Veröffentlichungstag der Anmeldung: **20.10.2004**
(21) Anmeldenummer: 04004304.4
(22) Anmeldetag: 26.02.2004
(51) Int. Cl.: F28F 9/00

(54) **Wärmeübertrageranordnung für Kraftfahrzeuge**

(30) Priorität: 11.04.2003 DE 10316614
(71) Anmelder: Modine Manufacturing Company, Racine/Wisconsin 54403-2552 (US)
(72) Erfinder: Hitt, Jonathan, Dipl.-Ing., 73728 Esslingen (DE); Tasdelen, Metin, Dipl.-Ing., 73265 Dettingen (DE)
(74) Vertreter: Wolter, Klaus-Dietrich

(57) **Zusammenfassung**

Die Erfindung betrifft eine Wärmeübertrageranordnung für Kraftfahrzeuge, bei der die Sammelkästen (1, 2) besitzenden Wärmeübertrager (3, 4, 5) in einer Umrahmung (10) angeordnet sind, um von der Kühlluft (KL) durchströmt zu werden, wobei die Umrahmung (10) Mittel zur Befestigung der Wärmeübertrager (3, 4, 5) an Befestigungspunkten (11) aufweist und wobei Stützlager (12) zur Abstützung der Anordnung im Kraftfahrzeug vorgesehen sind. Diese Anordnung wird hinsichtlich ihrer Flexibilität wesentlich verbessert, wenn die Umrahmung (10) erfindungsgemäß aus Rahmenteilen (6a, 6b, oder 6c, 6d, 6e, 6f, oder 6g, 6h) besteht, die wenigstens einen Wärmeübertrager umrahmen, wobei die Umrahmung (10) in Erstreckungsrichtung wenigstens einer der Längs - und / oder der Querseiten (15) der Umrahmung (10) größenverstellbar ist.

## Beschreibung

Die Erfindung betrifft eine Wärmeübertrageranordnung für Kraftfahrzeuge, bei der die Sammelkästen besitzenden Wärmeübertrager in einer Umrahmung, bestehend aus Längs - und Querseiten, angeordnet sind und von der Kühlluft durchströmt werden, wobei die Umrahmung Mittel zur Befestigung der Wärmeübertrager an Befestigungspunkten aufweist und wobei Stützlager zur Abstützung der Anordnung im Kraftfahrzeug vorgesehen sind.

Diese Wärmeübertrageranordnung ist aus der internationalen Patentanmeldung WO 99/47875 bekannt. Die Umrahmung besteht dort aus einem u - förmigen Rahmen, der an den Innenseiten seiner beiden gegenüberliegenden Schenkel Führungen besitzt, in die ein Wärmeübertrager eingeschoben werden kann. Die Umrahmung wird dann durch eine zweite Querstrebe zu einer geschlossenen Rahmenkonstruktion komplettiert. Es ist mit dieser bekannten Rahmenkonstruktion der Wärmeübertrageranordnung nicht, oder nur mit aufwendigen Änderungen der Rahmenkonstruktion, möglich, Wärmeübertrager unterschiedlicher Abmessungen unterzubringen. Somit scheint die Flexibilität der Wärmeübertrageranordnung verbesserungsbedürftig zu sein.
Weiterer Stand der Technik, der ebenfalls Rahmenkonstruktionen aufweist, ist der Anmelderin beispielsweise aus EP 0 020 190, aus CA 1 081 277, aus DE 100 61 561 A1 oder aus DE 195 14 016 C1 bekannt. Der beschriebene Nachteil trifft mehr oder weniger auch auf die Anordnungen aus den vorstehend genannten Dokumenten zu. In der kürzlich angemeldeten DE 102 50 334.6 wird ein geschlossener, einstückiger Rahmen aus Kunststoff eingesetzt, der es offensichtlich nicht gestattet, Wärmeübertrager vorzusehen, die nicht in den Umfang der Umrahmung hineinpassen.

Die Aufgabe der Erfindung besteht demzufolge darin, eine Wärmeübertrageranordnung zur Verfügung zu stellen, deren Rahmenkonstruktion eine bessere Flexibilität zulässt, so dass beispielsweise eine gesamte Baureihe von Kraftfahrzeugen mit einer Wärmeübertrageranordnung ausgerüstet werden kann, die die gleiche Rahmenkonstruktion aufweist.
Diese Aufgabe wird bei einer dem Oberbegriff entsprechenden Wärmeübertrageranordnung erfindungsgemäß durch die Merkmale im Kennzeichen des Anspruchs 1 gelöst. Die Umrahmung besteht aus Rahmenteilen, die wenigstens einen Wärmeübertrager umrahmen, wobei die Umrahmung in Erstreckungsrichtung wenigstens einer der Längs - und / oder Querseiten der Umrahmung größenverstellbar ist.

Gemäß einem Ausführungsbeispiel ist vorgesehen, dass die Umrahmung aus einem ersten etwa u - förmigen Rahmen und einem zweiten etwa u - förmigen Rahmen besteht, die zusammenpassen, um wenigstens einen Wärmeübertrager zu umrahmen, wobei die aus den beiden Rahmen bestehende Umrahmung in Erstreckungsrichtung der Schenkel der Rahmen größenverstellbar ist.
Die Schenkel der beiden Rahmen sind in entsprechenden Positionen vorzugsweise lösbar zu verbinden.
Die Querstrebe des zweiten u-förmigen Rahmens ist geringfügig kürzer als die Querstrebe des ersten u - förmigen Rahmens, so dass der zweite Rahmen in den ersten Rahmen hineinpasst. Die Möglichkeit zur Größenverstellung der Rahmenkonstruktion schafft die Voraussetzungen dafür, beispielsweise für leichte, mittlere und schwere Lastkraftwagen, die gleiche Rahmenkonstruktion einzusetzen, deren Herstellung deshalb wesentlich kostengünstiger erfolgen kann. Bei leichten Lastkraftwagen sind wegen der geringeren Motorleistung kleinere Wärmeübertrager vorzusehen, wobei dann beide Rahmen so weit zusammengeschoben und in dieser Position an ihren Schenkeln lösbar verbunden sind, dass sie z. B. die kleinstmögliche Fläche einschließen. Umgekehrt kann bei schweren Lastkraftwagen mit wesentlich größeren Wärmeübertragern die lösbare Verbindung so erfolgen, dass z. B. die größtmögliche Fläche von beiden Rahmen umfasst wird. Die Position der lösbaren Verbindung der Schenkel ist veränderbar.
Die lösbare Verbindung der Schenkel kann so ausgebildet sein, dass mittels der Umrahmung eine Vorspannkraft auf den mindestens einen Wärmeübertrager ausgeübt wird. Auf jeden Fall sollte sichergestellt sein, dass sich die Wärmeübertrager im Betrieb nicht wesentlich bewegen können, d. h, dass sie nicht aus den elastischen Befestigungspunkten herausrutschen können.
Tragarme oder dergleichen Befestigungselemente an den Wärmeübertragerrn sind nicht unbedingt notwendig.
Die Schenkel eines u - förmigen Rahmens sind etwa gleich lang, wobei die Schenkel des einen Rahmens länger sind als die Schenkel des anderen Rahmens.

Die Schenkel eines Rahmens können alternativ auch unterschiedliche Länge besitzen. In diesem Fall werden die beiden Rahmen so zusammengefügt, dass der längere Schenkel des einen Rahmens mit dem kürzeren Schenkel des anderen Rahmens korrespondiert.
Es ist weiter vorteilhaft, wenigstens einen der u - förmigen Rahmen mit einer Verstrebung zwischen seinen Schenkeln auszurüsten, um die notwendige Stabilität der Rahmenkonstruktion zu gewährleisten.
Die Befestigungspunkte des mindestens einen Wärmeübertragers sind innerhalb der Umrahmung elastisch ausgebildet und ansonsten ist keine weitere Befestigung des Wärmeübertragers an der Umrahmung erforderlich. Die Elastizität ist so gewählt, dass nicht nur eine vibrationsreduzierte Lagerung der Wärmeübertrager erreicht wird, sondern auch deren thermisch bedingten Längenänderungen berücksichtigt, d. h., zugelassen werden. Falls eine Vorspannkraft mittels der Umrahmung auf den Wärmeübertrager ausgeübt wird, sollte die elastische Befestigung so ausgelegt sein, dass auch dann die thermisch bedingten Längenänderungen möglich sind. Als elastische Befestigung können deshalb auch Federelemente zum Einsatz kommen.
Vorzugsweise sind die Wärmeübertrager mit oben und unten liegenden Sammelkästen angeordnet und die elastischen Befestigungspunkte sind zwischen den Sammelkästen und den Querstreben der beiden Rahmen anzutreffen.
Grundsätzlich ist es natürlich auch möglich die elastischen Befestigungspunkte zwischen den die Sammelkästen gewöhnlich an den Seite verbindenden Seitenteilen und der Umrahmung vorzusehen. Dies kann dann der Fall sein, wenn sogenannte Querstrom - Wärmeübertrager vorgesehen werden, bei denen die Sammelkästen vertikal, d. h. links und rechts des Wärmeübertragers, angeordnet sind.
Jeder elastische Befestigungspunkt besteht vorzugsweise aus einer Öffnung mit einem konischen Rand, in die ein korrespondierend geformter Zapfen hineinragt, wobei zwischen dem Zapfen und dem Rand der Öffnung ein schwingungsdämpfender Werkstoff, beispielsweise Gummi, oder ein Federelement, eingefügt ist. Es muss sich allerdings nicht unbedingt um eine Öffnung handeln. Die gleiche Wirkung kann mit einer Ausbuchtung oder dergleichen vorzugsweise konischen Verformung erzielt werden, in die der Zapfen eingreifen kann.
Die lösbare Verbindung zwischen den Schenkeln der Rahmen kann entweder so ausgebildet sein, dass eine stufenlose Größenverstellung erfolgen kann oder so, dass eine Größenverstellung in vorgegebenen Stufen möglich wird.

Beide Rahmen können aus Kunststoff bestehen, wobei einer der Rahmen Verstärkungen in seinen Schenkeln aufweisen kann.
Ferner kann ein Rahmen aus Kunststoff und der zweite Rahmen aus Metall bestehen.
Die Wärmeübertrager können nebeneinander (side by side) und/oder in Strömungsrichtung der Kühlluft hintereinander (front to back) in der Umrahmung angeordnet sein, und sie sind vorzugsweise ausschließlich über elastische Befestigungspunkte mit der Umrahmung verbunden.

Wie aus den beschriebenen Merkmalen hervorgeht, ist die Größenverstellung der Umrahmung bei diesem Ausführungsbeispiel in einer Richtung, vorzugsweise in der vertikalen Richtung, vorgesehen.
Ein weiteres Ausführungsbeispiel sieht demgegenüber eine Größenverstellung der Umrahmung in der vertikalen und in der horizontalen Richtung vor, und es bietet deshalb hinsichtlich Flexibilität noch mehr Vorteile als das erste Ausführungsbeispiel. Es benötigt vier Winkelrahmen, die gemeinsam die Umrahmung bilden, und es ist deshalb möglicherweise etwas aufwendiger als das erste Beispiel, bei dem lediglich zwei einstückige Rahmen vorhanden sind. Bezüglich der Kostenaufwendungen soll allerdings darauf aufmerksam gemacht werden, dass die vier Winkelrahmen absolut identisch sein können, wodurch ein wesentlicher Einfluss auf die Senkung der Herstellungskosten genommen werden kann.
Ein anderes Ausführungsbeispiel sieht vor, dass die Umrahmung aus zwei Winkelrahmen besteht, die mit einem ihrer Schenkel zusammenpassen und wenigstens einen Wärmeübertrager von drei Seiten einfassen, wobei die Umrahmung in Erstreckungsrichtung der zusammenpassenden Schenkel der Winkelrahmen größenverstellbar ist, und wobei die Umrahmung entweder an der vierten Seite mittels einer Traverse komplettierbar ist oder an dieser Seite offen bleibt. Mit diesem Ausführungsbeispiel, dass zwei L-förmige Winkelrahmen vorsieht, erfolgt die Größenverstellung wiederum nur in einer Richtung, die hier aber - im Gegensatz zum ersten Ausführungsbeispiel - die horizontale Richtung ist.

Wegen weiterer Merkmale wird auf die Patentansprüche hingewiesen.
Die Erfindung wird nachfolgend in Ausführungsbeispielen unter Bezugnahme auf die beiliegenden Zeichnungen beschrieben. Aus der folgenden Beschreibung gehen weitere Merkmale und Wirkungen hervor, die sich gegebenenfalls als besonders wichtig erweisen können.

Die beigefügten Figuren zeigen Folgendes:
- Fig. 1: Perspektivansicht auf eine Wärmeübertrageranordnung, von einer Seite gesehen;
- Fig. 2: Perspektivansicht auf die Anordnung, von der anderen Seite gesehen;
- Fig. 3: Explosionsdarstellung auf die Umrahmung ohne Wärmeübertrager;
- Fig. 4: Perspektivansicht auf einen Winkelrahmen;
- Fig. 5: Explosionsdarstellung eines Ausschnittes der Umrahmung;
- Fig. 6: Explosionsdarstellung der Wärmeübertrageranordnung aus Fig. 2;
- Fig. 7: Wärmeübertrageranordnung in side - by - side - Anordnung
- Fig. 8: Detailansicht eines Befestigungspunktes;
- Fig. 9: Wärmeübertageranordnung in side-by-side - und in front-to-back -Anordnung in einem zweiten Ausführungsbeispiel
- Fig.10: Explosionsdarstellung eines dritten Ausführungsbeispiels

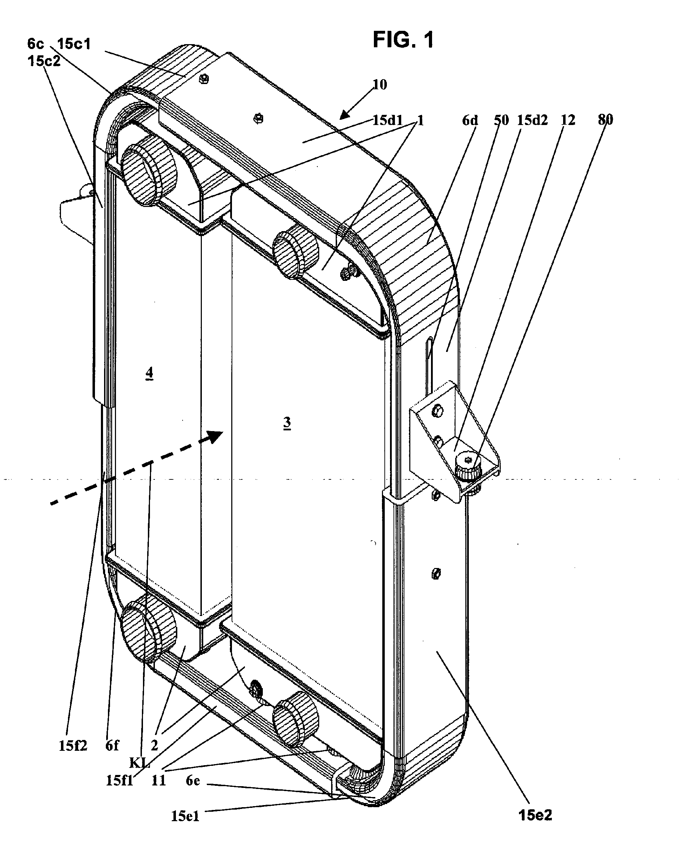

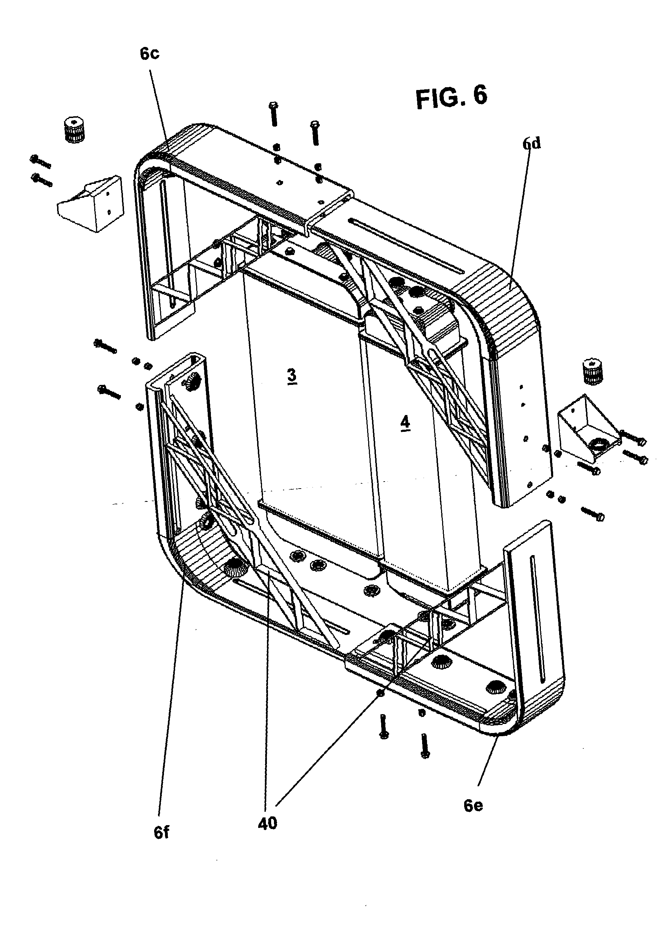

Die Figuren 1 - 6 zeigen eine Wärmeübertrageranordnung, bei der die Umrahmung **10** aus vier Winkelrahmen **6c, 6d, 6e** und **6f** besteht. Die restlichen Figuren beziehen sich auf eine Wärmeübertrageranordnung, die eine Umrahmung **10** aus einem ersten und einem zweiten etwa u-förmigen Rahmen **6a, 6b** aufweist und auf eine Wärmeübertrageranordnung mit zwei Winkelrahmen **6g, 6h**.
Die Wärmeübertrageranordnung ist für Kraftfahrzeuge gedacht, bei der, gemäß den Fig. 1 - 6, die Sammelkästen **1**, **2** besitzenden Wärmeübertrager **3**, **4** in einer Umrahmung **10** angeordnet sind, um von der Kühlluft KL durchströmt zu werden, wobei die Umrahmung **10** Mittel zur Befestigung der Wärmeübertrager **3**, **4** mit ihren Sammelkästen **1**, **2** an Befestigungspunkten **11** aufweist und wobei Stützlager **12** zur Abstützung der Anordnung im Kraftfahrzeug vorgesehen sind. Die Stützlager **12** sind links und rechts an der Umrahmung **10** befestigt. Die Umrahmung **10** besteht aus Rahmenteilen **6c, 6d, 6e, 6f**, die wenigstens einen Wärmeübertrager umrahmen, wobei die Umrahmung **10** in Erstreckungsrichtung der Längs - und der Querseiten **15** der Umrahmung **10** größenverstellbar ist. Die Bezeichnung "Längsseiten" und "Querseiten" dient lediglich der Unterscheidung der Seiten und sagt jedenfalls nichts über deren Länge aus. Beide Seiten können beispielsweise durchaus die gleiche Länge besitzen.

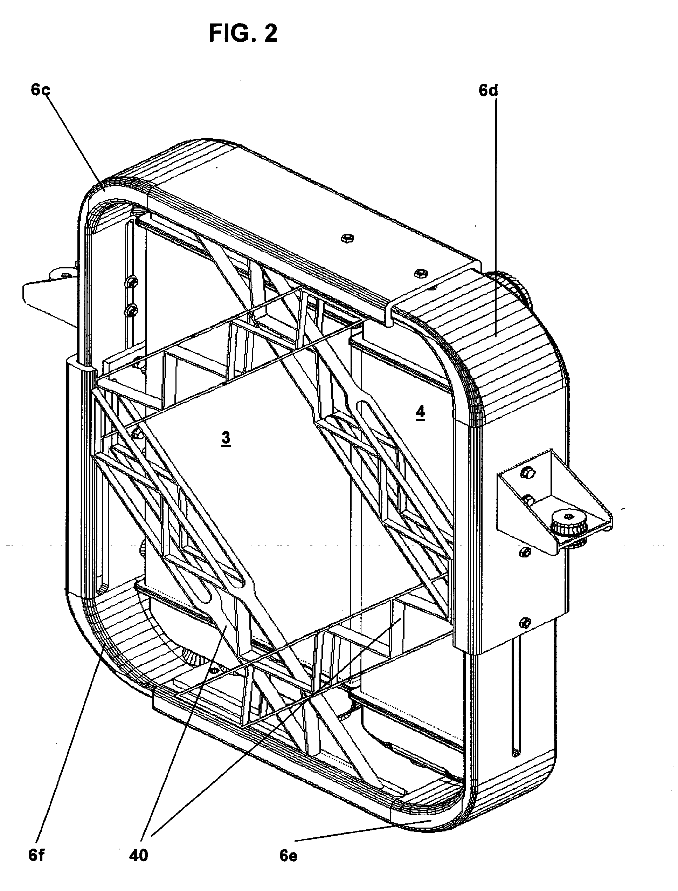

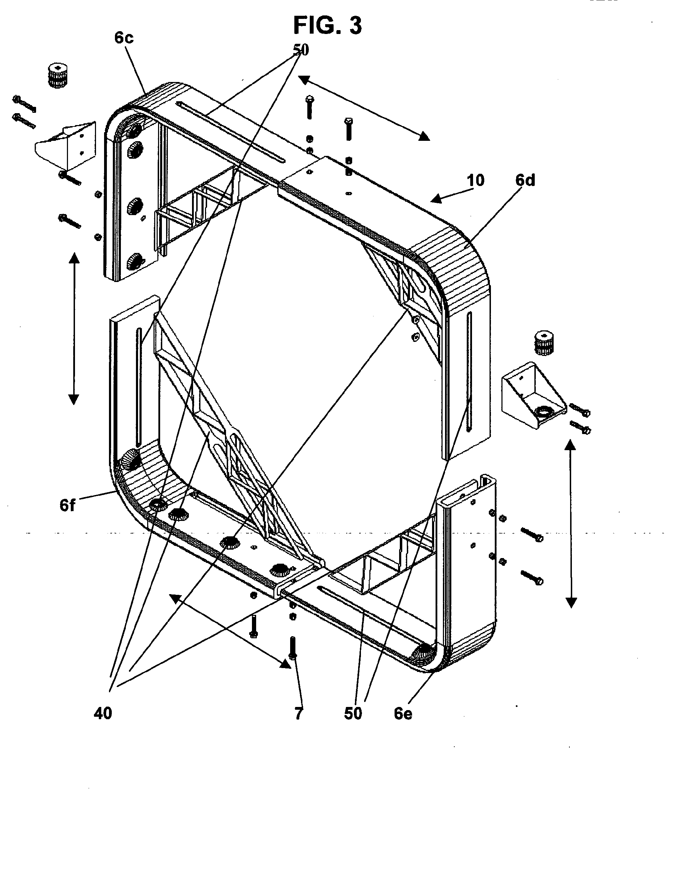

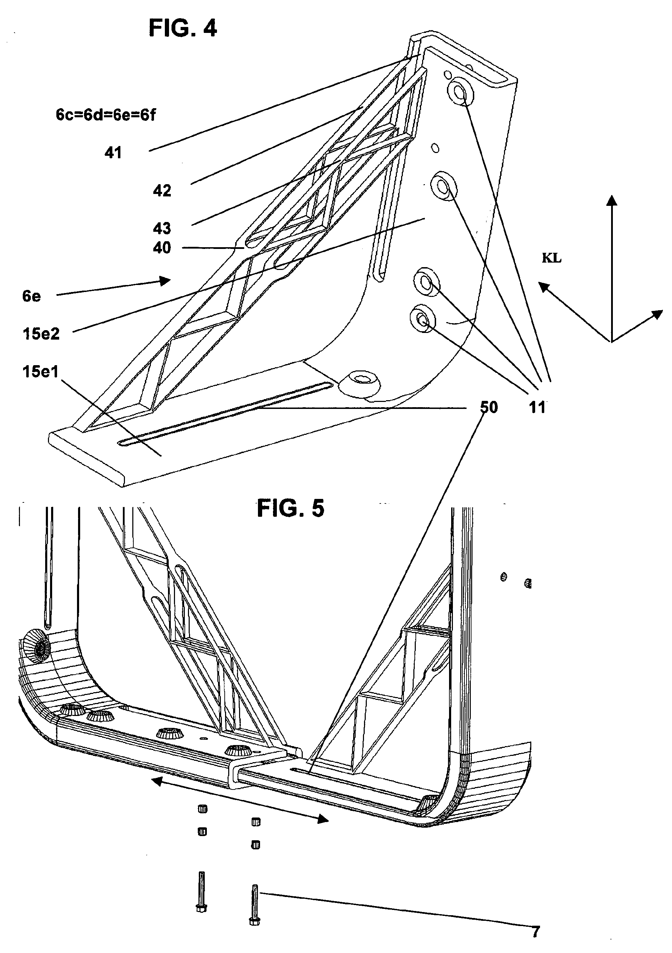

Die Erstreckungsrichtung der Längs - und Querseiten **15** ist identisch mit derjenigen der zusammenpassenden Schenkel der Rahmenteile.
Die Umrahmung **10** wird hier aus vier die Längs - und Querseiten **15** bildenden Winkelrahmen **6c, 6d, 6e, 6f** gebildet, die gemeinsam zwei Wärmeübertrager **3, 4** umrahmen, wobei die Umrahmung **10** in der Erstreckungsrichtung der ersten Schenkel **15c1, 15d1, 15e1, 15f1** (Längsseite) der Winkelrahmen **6c, 6d, 6e, 6f** und in der Erstreckungsrichtung der zweiten Schenkel **15c2, 15d2, 15e2, 15f2** (Querseite) der Winkelrahmen **6c, 6d, 6e, 6f** größenverstellbar ist. Die Wärmeübertrager **3, 4** sind in den Figuren 1 - 6 lediglich nebeneinander angeordnet. Die Anordnung könnte zusätzlich auch hintereinander angeordnete Wärmeübertrager aufweisen, wie das in den anderen, weiter unten beschriebenen, Figuren prinzipiell gezeigt ist.
Sämtliche Winkelrahmen **6c, 6d, 6e, 6f** sind identisch, was durch einen Blick auf die Fig. 3 erkennbar ist, in der keine Wärmeübertrager eingezeichnet wurden, um diesen Sachverhalt einfacher erkennbar zu machen. Man kann, beispielsweise beim rechten oberen Winkelrahmen **6d** beginnend, in Gedanken im Uhrzeigersinn oder entgegen demselben um die Umrahmung **10** herumfahren und den Winkelrahmen **6d** dreimal jeweils um 90° drehen, und man wird dabei feststellen, dass die Winkelrahmen identisch ausgebildet sind. Jeder Winkelrahmen **6c, 6d, 6e, 6f** besitzt eine Verstrebung **40**. In der Fig. 4 wurde eine einzelner Winkelrahmen abgebildet, der beispielsweise mit **6e** bezeichnet ist. Der Winkelrahmen **6e** besitzt in mit den anderen Winkelrahmen **6c, 6d, 6f** identischer Ausbildung, einen ersten Schenkel **15e1** und einen zweiten Schenkel **15e2**. Der im Bild vertikale Schenkel **15e2** besitzt vorzugsweise - aber nicht notwendigerweise - einen größeren Querschnitt als der Schenkel **15e1** und ist als Hohlprofil ausgebildet. In nicht gezeigten Ausführungen handelt es sich z. B. um ein U - Profil. Es kann als vorteilhaft angesehen werden, wenn die ineinandergreifenden Schenkel **15** der Winkelrahmen **6c, d, e, f** wenigstens in einer Richtung - hier in Strömungsrichtung der Kühlluft **KL -** durch Formschluss gehalten werden, was durch ein Hohlprofil oder beispielsweise durch eine U - profilartige Ausbildung eines der Schenkel **15** erreicht wird. In dem gezeigten Hohlprofil befindet sich ein Schlitz **41,** in Längsrichtung des Schenkels **15e2** verlaufend. Die erwähnte Verstrebung **40** liegt in einer Ebene mit dem Schlitz **41,** und sie ist zum Anschluss an das Hohlprofil weisend in ausreichender Länge in zwei Arme **42** und **43** aufgegabelt. Eine solche Aufgabelung und der Schlitz **41** sind nicht notwendig, wenn anstelle des Hohlprofils ein U - Profil oder eine dem Fachmann geläufige, andersartig ausgebildete Führung des einen Schenkels **15/1** in dem anderen Schenkel **15/2** gewählt wird. Der eine Arm **42** endet an dem einen Rand des Schlitzes **41** und der andere Arm **43** endet an dem anderen Rand des Schlitzes **41.** Im Anschlussbereich an den im Bild horizontalen Schenkel **15e1** ist die Verstrebung **40** lediglich einarmig ausgebildet. Im montierten Zustand kann das einarmige Stück der Verstrebung **40** des einen Winkelrahmens **6c** zwischen die Arme **42, 43** der Verstrebung **40** des benachbarten Winkelrahmens geschoben werden, so dass sich die Verstrebungen **40** der benachbarten Winkelrahmen überkreuzen können, wie beispielsweise aus den Fig. 2 und 5 sehr gut zu sehen ist. In Fig. 5 ist durch einen Pfeil die Bewegungsrichtung der Winkelrahmen bei der Montage bzw. Demontage angezeigt worden.
Zurück zur Fig. 4, wo sich in dem horizontalen Schenkel **15e1** ein weiterer Schlitz **50** befindet, der ebenfalls in Längsrichtung des Schenkels **15e1** verläuft. Dieser Schlitz **50** dient der stufenlosen Größenverstellung innerhalb gewisser Grenzen der Umrahmung **10.** Durch diesen Schlitz **50** hindurch kann z. B. ein Befestigungsorgan **7** (Fig. 3, 5) geführt werden, um die Arretierung der Umrahmung **10** in der gewünschten Größe zu bewerkstelligen.

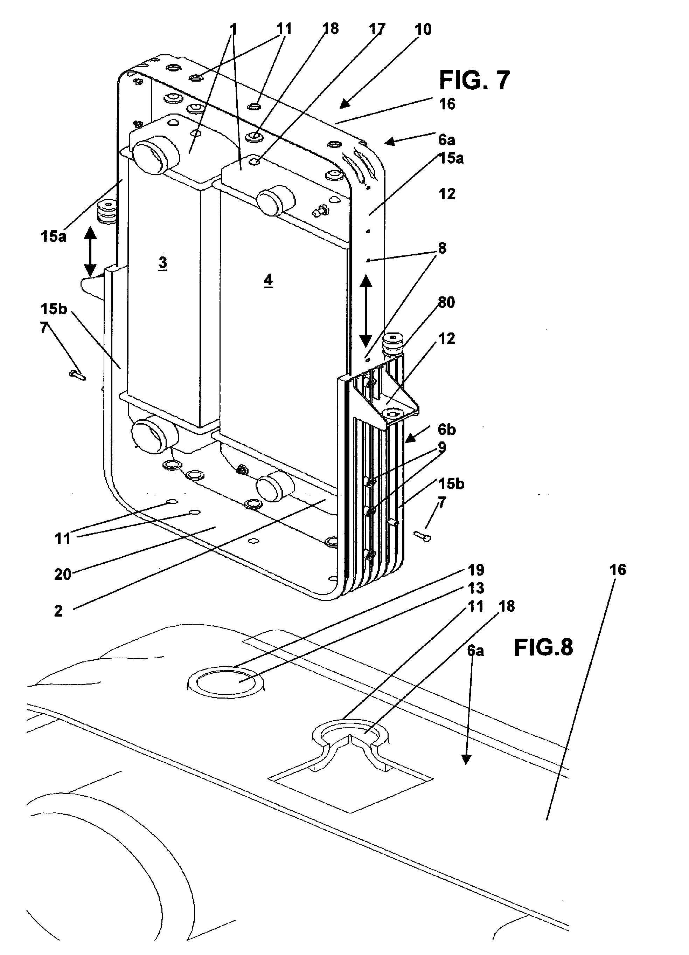

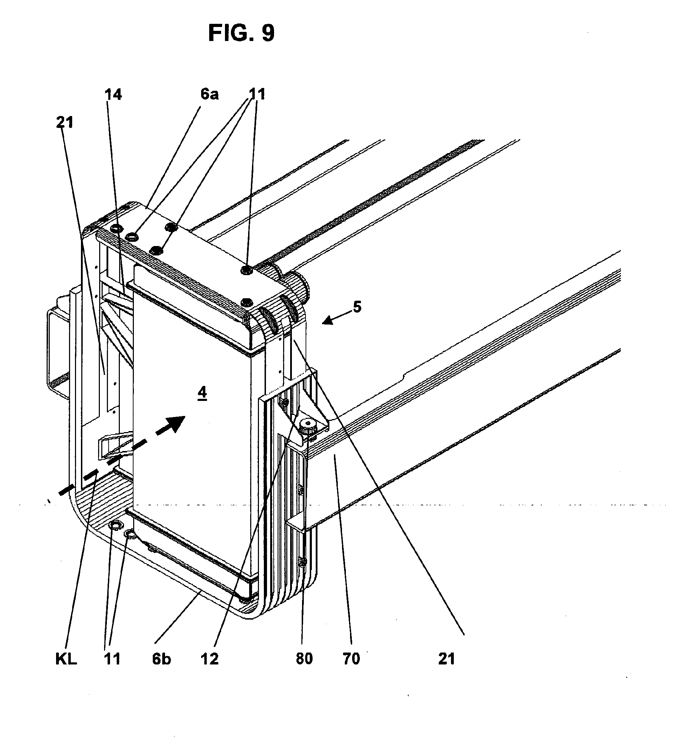

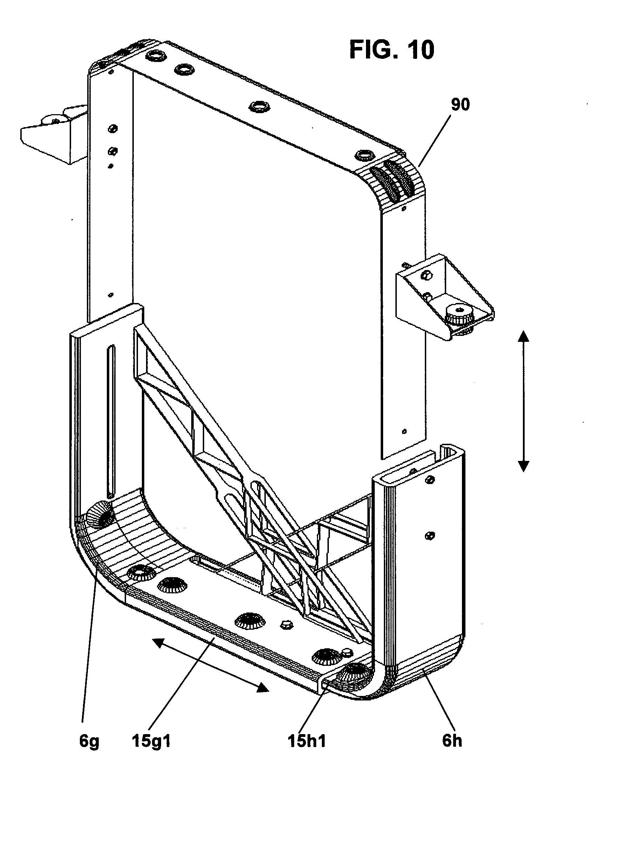

Die Fig. 7 und 10 zeigen eine andere Wärmeübertrageranordnung, bei der die Umrahmung **10** aus zwei etwa U - förmigen Rahmen **6a** und **6b** besteht und die in vertikaler Richtung größenverstellbar ist. Die Erstreckungsrichtung der Schenkel **15a**, **15b** der Rahmen **6a** und **6b** ist also vertikal verlaufend. Die Fig. 7 ist ebenfalls eine Explosionsdarstellung und spricht deshalb weitgehend aus der Darstellung selbst. Die Schenkel **15a** des oberen Rahmens **6a** befinden sich zwischen den Schenkeln **15b** des unteren Rahmens **6b,** an dem auch die Stützlager **12** angeordnet sind, weil der untere Rahmen **6b** stabiler ausgebildet und deshalb geeignet ist, die Lagerkräfte gut aufzunehmen. Im weiteren Unterschied zur vorne beschriebenen Wärmeübertrageranordnung, ist hier die Größenverstellung in Stufen vorgesehen, wozu in den Schenkeln **15a** Öffnungen **8** vorhanden sind, die in bestimmten Einstellpositionen mit Öffnungen **9** in den Schenkeln **15b** übereinstimmen. Ein Befestigungsorgan **7** wird in den übereinstimmenden Öffnungen **8, 9** angebracht. Dem Fachmann stehen allerdings auch formschlüssige Verbindungen, wie beispielsweise Rastverbindungen o. ä. zur Verfügung, die er gegebenenfalls einsetzen wird, um auf Befestigungsorgane **7** verzichten zu können. Der untere Rahmen **6b** besteht aus Kunststoff und der obere Rahmen **6a** besteht aus Metall, beispielsweise aus Aluminiumblech oder aus Stahlblech. Die Anordnung in der Fig. 9 besitzt zwischen den Schenkeln **15b** eine Verstrebung **14**. In den Schenkeln **15a** ist demzufolge ein länglicher Ausschnitt **21** vorhanden, in den die Verstrebung **14** beim Zusammenfügen beider Rahmen **6a, 6b** hineingleiten kann. Der linke Wärmeübertrager **3** wurde in der Fig. 9 nicht gezeichnet, um den Blick auf die Verstrebung zu gestatten. In diesem Ausführungsbeispiel sind also Wärmeübertrager in side - by - side und in front - to - back -Anordnung zu sehen. Ferner wurde dort die Abstützung der Anordnung in einem Kraftfahrzeug an den Längsholmen **70** des Fahrzeugrahmens gezeigt. Es sind standardmäßige Dämpfer **80** vorgesehen.
In Fig. 8 wurde ein vergrößerter Ausschnitt eines elastischen Befestigungspunktes **11** dargestellt. Nach dieser Abbildung ist vorgesehen, beispielsweise in den Querstreben **16** eine Öffnung **13** zu stanzen und einen konischen Kragen **19** um die Öffnung **13** herum auszubilden. Am Sammelkasten **1** eines Wärmeübertragers ist ein Zapfen **17** angeordnet, der in die Öffnung **13** hineinragt, wobei ein schwingungsdämpfendes Element **18** zwischen dem Zapfen **17** und dem Kragen **19** der Öffnung **13** angeordnet ist. Diese Art der Ausbildung eines elastischen Befestigungspunktes **11** bewirkt, dass die Wärmeübertrager stabil in ihrer Position gehalten werden und nicht zusätzlich zu befestigen sind. Eine gewisse Vorspannung der Rahmen **6a, 6b** auf die Wärmeübertrager kann vorgesehen werden. Es kann anstelle der Öffnung **11** auch eine pfannenartige Ausformung vorgesehen werden, wie es bei den Befestigungspunkten **11** der zuerst beschriebenen Anordnung vorgesehen wurde, was insbesondere aus der Abbildung gemäß Fig. 4 zu sehen ist.

Die Fig. 10 zeigt eine andere Lösung, bei der die Umrahmung **10** aus zwei etwa L - förmigen Winkelrahmen **6g, 6h** besteht, die mit je einem ihrer Schenkel **15g1, 15h1** zusammenpassen und wenigstens einen Wärmeübertrager **3, 4** von drei Seiten einfassen, wobei die Umrahmung **10** in Erstreckungsrichtung der zwei zusammenpassenden Schenkel **15g1, 15h1** der Winkelrahmen **6g, 6h** größenverstellbar ist, und wobei die Umrahmung **10** entweder an der vierten Seite mittels einer Traverse **90** komplettierbar ist oder an dieser Seite offen bleibt. Die Traverse **90** ist im gezeigten Ausführungsbeispiel u - förmig ausgebildet. Diese Traverse **90** muss ausgetauscht werden, falls in Richtung der Schenkel **15g1, 15h1** eine andere Größe der Umrahmung **10** eingestellt werden soll. Dies ist jedoch kein wesentlicher Aufwand, da es sich bei der Traverse **90** um ein aus Blech hergestelltes Teil handeln kann.
Die Umrahmung **10** ist in allen Ausführungsbeispielen so gestaltet, dass sie raumsparend ist. Die Rahmenteile sind deshalb relativ flach ausgebildet, und sie sind in unmittelbarer Nähe der äußeren Kontur der Wärmeübertrager angeordnet.

## Patentansprüche

1. Wärmeübertrageranordnung für Kraftfahrzeuge, bei der die Sammelkästen (1, 2) besitzenden Wärmeübertrager (3, 4, 5) in einer Umrahmung (10), bestehend aus Längs - und Querseiten, angeordnet sind und von der Kühlluft (KL) durchströmt werden, wobei die Umrahmung (10) Mittel zur Befestigung der Wärmeübertrager (3, 4, 5) an Befestigungspunkten (11) aufweist und wobei Stützlager (12) zur Abstützung der Anordnung im Kraftfahrzeug vorgesehen sind,
**dadurch gekennzeichnet, dass**
die Umrahmung (10) aus Rahmenteilen (6a, 6b, oder 6c, 6d, 6e, 6f, oder 6g, 6h) besteht, die wenigstens einen Wärmeübertrager umrahmen, wobei die Umrahmung (10) in Erstreckungsrichtung in wenigstens einer der Längs - und / oder Querseiten (15) der Umrahmung (10) größenverstellbar ist.

2. Wärmeübertrageranordnung nach Anspruch 1, **dadurch gekennzeichnet, dass** die Umrahmung (10) aus einem ersten etwa u - förmigen Rahmenteil (6a) und einem zweiten etwa u - förmigen Rahmenteil (6b) besteht, die zusammenpassen, um wenigstens einen Wärmeübertrager zu umrahmen, wobei die aus den beiden Rahmenteilen (6a, 6b) bestehende Umrahmung (10) in Erstreckungsrichtung der Schenkel (15a, 15b) der Rahmenteile (6a, 6b) größenverstellbar ist, wobei die Schenkel (15a, 15b) der Rahmenteile (6a, 6b) in entsprechenden Positionen lösbar zu verbinden sind.

3. Wärmeübertrageranordnung nach Anspruch 1 oder 2, **dadurch gekennzeichnet, dass** die lösbare Verbindung der Schenkel (15a, 15b) so ausgebildet ist, dass mittels der Umrahmung (10) im Bedarfsfall eine Vorspannkraft auf den mindestens einen Wärmeübertrager ausgeübt werden kann.

4. Wärmeübertrageranordnung nach einem der Ansprüche 1 - 3, **dadurch gekennzeichnet, dass** die Schenkel (15a, 15b) eines u - förmigen Rahmenteils (6a, 6b) etwa gleich lang sind.

5. Wärmübertrageranordnung nach einem der Ansprüche 1 - 3, **dadurch gekennzeichnet, dass** die Schenkel (15a, 15b) unterschiedliche Länge besitzen.

6. Wärmeübertageranordnung nach einem der vorstehenden Ansprüche, **dadurch gekennzeichnet, dass** wenigstens eines der etwa u - förmigen Rahmenteile (6a) eine Verstrebung (9) zwischen den Schenkeln (15a) aufweist.

7. Wärmeübertrageranordnung nach einem der vorstehenden Ansprüche, **dadurch gekennzeichnet, dass** die Befestigungspunkte (11) des mindestens einen Wärmeübertragers innerhalb der Umrahmung (10) elastisch ausgebildet sind und ansonsten vorzugsweise keine Befestigung des Wärmeübertragers an der Umrahmung (10) vorhanden ist.

8. Wärmeübertrageranordnung nach einem der vorstehenden Ansprüche, **dadurch gekennzeichnet, dass** die Wärmeübertrager mit oben und unten liegenden Sammelkästen (1, 2) angeordnet sind und die elastischen Befestigungspunkte (11) zwischen den Sammelkästen (1, 2) und den Querstreben (16, 20) der beiden Rahmenteile (6a, 6b) anzutreffen sind.

9. Wärmeübertrageranordnung nach Anspruch 7 oder 8, **dadurch gekennzeichnet, dass** jeder elastische Befestigungspunkt (11) vorzugsweise aus einer Öffnung (13) mit einem konischen Kragen (19) oder aus einer konischen Ausformung besteht, in die ein korrespondierend geformter Zapfen (17) hineinragt, wobei zwischen dem Zapfen (17) und dem Kragen (19) der Öffnung (13) bzw. der Ausformung ein schwingungsdämpfendes Element (18) eingefügt ist.

10. Wärmeübertageranordnung nach einem der vorstehenden Ansprüche, **dadurch gekennzeichnet, dass** die lösbare Verbindung zwischen den Schenkeln (15) der Rahmenteile (6a, 6b) entweder als eine stufenlose Größenverstellung oder als eine Größenverstellung in Stufen ausgebildet ist.

11. Wärmeübertrageranordnung nach einem der vorstehenden Ansprüche, **dadurch gekennzeichnet, dass** beide Rahmenteile (6a, 6b) aus Kunststoff bestehen, wobei eines der Rahmenteile Verstärkungen (30) an den Schenkeln (15) aufweisen kann.

12. Wärmeübertrageranordnung nach einem der vorstehenden Ansprüche 1 bis 10, **dadurch gekennzeichnet, dass** ein Rahmenteil (6a) aus Kunststoff und das zweite Rahmenteil (6b) aus Metall besteht.

13. Wärmeübertrageranordnung, insbesondere nach Anspruch 12, **dadurch gekennzeichnet, dass** das zweite u - förmige Rahmenteil (6b), dessen Schenkel (15b) zwischen die Schenkel (15a) des ersten u - förmigen Rahmenteils (6a) passen, aus Metall besteht.

14. Wärmeübertrageranordnung nach einem der vorstehenden Ansprüche, **dadurch gekennzeichnet, dass** mindestens zwei Wärmeübertrager side by side in der Umrahmung (10) angeordnet und ausschließlich über elastische Befestigungspunkte (11) mit der Umrandung (10) verbunden sind.

15. Wärmeübertrageranordnung nach einem der vorstehenden Ansprüche 1 - 13, **dadurch gekennzeichnet, dass** mindestens zwei Wärmeübertrager in Strömungsrichtung der Kühlluft gesehen hintereinander liegend (front to back) angeordnet sind, wobei diese Wärmeübertrager ausschließlich über elastische Befestigungspunkte (11) mit der Umrahmung (10) verbunden sind.

16. Wärmeübertrageranordnung nach einem der vorstehenden Ansprüche 1 - 13, **dadurch gekennzeichnet, dass** Wärmeübertrager in side by side - und in front to back - Anordnung in einer Wärmeübertrageranordnung vorgesehen sind, die mindestens zwei vertikale Ebenen bilden, wobei die Wärmeübertrager ausschließlich über elastische Befestigungspunkte (11) mit der Umrahmung (10) verbunden sind.

17. Wärmeübertrageranordnung nach Anspruch 16, **dadurch gekennzeichnet, dass** die Umrahmung (10) eine entsprechende Tiefe (in Richtung der Kühlluft) aufweist, um mindestens zwei in Tiefenrichtung hintereinander angeordnete elastische Befestigungspunkte (11) vorsehen zu können.

18. Wärmeübertrageranordnung für Kraftfahrzeuge nach Anspruch 1, **dadurch gekennzeichnet, dass** die Umrahmung (10) aus Winkelrahmenteilen (6c, 6d, 6e, 6f) gebildet ist, die gemeinsam wenigstens einen Wärmeübertrager umrahmen, wobei die Umrahmung (10) in der Erstreckungsrichtung der ersten Schenkel (15c1, 15d1, 15e1 15f1) der Winkelrahmenteile (6c, 6d, 6e, 6f) und in der Erstreckungsrichtung der zweiten Schenkel (15c2, 15d2, 15e2, 15f2) der Winkelrahmenteile (6c, 6d, 6e, 6f) größenverstellbar ist.

19. Wärmeübertrageranordnung nach Anspruch 18, **dadurch gekennzeichnet, dass** die Winkelrahmenteile (6c, 6d, 6e, 6f) vorzugsweise identisch ausgebildet sind.

20. Wärmeübertrageranordnung nach Anspruch 18 oder 19, **dadurch gekennzeichnet, dass** die Winkelrahmenteile (6c, 6d, 6e, 6f) zwischen ihren Schenkeln (15c1 + 15c2, 15d1 + 15d2, 15e1 + 15e2 sowie 15f1 + 15f2) eine Verstrebung (40) aufweisen.

21. Wärmeübertrageranordnung nach einem der Ansprüche 18 - 20, **dadurch gekennzeichnet, dass** der eine Schenkel (15c2), bspw. des einen Winkelrahmenteils (6c), an dem anderen Schenkel (15f2) des anderen Winkelrahmenteils (15f) formschlüssig geführt ist, wozu die Schenkel unterschiedlich große Querschnitte aufweisen können.

22. Wärmeübertrageranordnung nach Anspruch 21, **dadurch gekennzeichnet, dass** der Schenkel (15c2) mit dem größeren Querschnitt bspw. des einen Winkelrahmenteils (6c) ein flaches Hohlprofil oder ein U - Profil ist, in das der Schenkel (15f2) mit dem kleineren Querschnitt bspw. des anderen Winkelrahmenteils (6f) einschiebbar und in der gewünschten Position arretierbar ist.

23. Wärmeübertrageranordnung nach einem der Ansprüche 18 - 22, **dadurch gekennzeichnet, dass** das Hohlprofil des einen Schenkels (15c2) des einen Winkelrahmenteils (6c) einen Schlitz (41) oder dergleichen Öffnung aufweist, in den die Verstrebung (40) des benachbarten Winkelrahmenteils (6f) einschiebbar ist.

24. Wärmeübertrageranordnung nach einem der Ansprüche 18 - 23, **dadurch gekennzeichnet, dass** je nach Größeneinstellung der Umrahmung (10) eine Überkreuzung oder keine Überkreuzung der Verstrebungen (40) benachbarter Winkelrahmenteile (6c, 6d, 6e, 6f) vorhanden ist.

25. Wärmeübertrageranordnung nach Anspruch 24, **dadurch gekennzeichnet, dass** die Verstrebung (40) beispielsweise zumindest zu einer Anschlussseite hin doppelarmig ausgebildet ist, um die Überkreuzung mit der Verstrebung (40) des benachbarten Winkelrahmens zu gestatten, wobei die letztgenannte Verstrebung (40) zwischen den Armen (42, 43) der zuerst genannten Verstrebung (40) angeordnet ist.

26. Wärmeübertrageranordnung nach einem der Ansprüche 18 - 25, **dadurch gekennzeichnet, dass** die Größenverstellung vorzugsweise stufenlos ausführbar ist, wozu der eine der ineinanderschiebbaren Schenkel einen Längsschlitz (50) aufweist, und dass Befestigungselemente (7) durch den Schlitz (50) geführt und am anderen Schenkel zu befestigen sind.

27. Wärmeübertrageranordnung nach Anspruch 26, **dadurch gekennzeichnet, dass** der Schlitz (50) zur Befestigung der Stützlager (12) nutzbar ist.

28. Wärmeübertrageranordnung für Kraftfahrzeuge nach Anspruch 1, **dadurch gekennzeichnet, dass**
die Umrahmung (10) aus Winkelrahmenteilen (6g, 6h) besteht, die mit einem ihrer Schenkel (15g1, 15h1) zusammenpassen und wenigstens einen Wärmeübertrager (3, 4) von drei Seiten einfassen, wobei die Umrahmung (10) in Erstreckungsrichtung der zusammenpassenden Schenkel (15g1, 15h1) der Winkelrahmenteile (6g, 6h) größenverstellbar ist, und wobei die Umrahmung (10) an der vierten Seite mittels einer Traverse (90) komplettierbar ist.

29. Wärmeübertrageranordnung für Kraftfahrzeuge nach Anspruch 28, **dadurch gekennzeichnet, dass** die Traverse (90) vorzugsweise U-förmig ausgebildet ist
